# EUROPEAN PATENT APPLICATION

(11) **EP 4 800 616 A1**
(43) Date of publication of application: **02.09.2026**
(21) Application number: 26156262.3
(22) Date of filing: 04.02.2026
(51) Int. Cl.: G06Q 10/0631, G06Q 50/40, G08G 5/20, G08G 5/30

(54) **SYSTEM AND METHOD OF TASK ALLOCATION MANAGEMENT FOR VEHICLE CHECKLISTS**

(30) Priority: 27.02.2025 IN 202511017364; 04.04.2025 US 202519170419
(71) Applicant: Honeywell International Inc., Charlotte, NC 28202 (US)
(72) Inventor: SUBRAMANIYAN, Muthusankar, Charlotte, 28202 (US); BALADHANDAPANI, Gobinathan, Charlotte, 28202 (US); KANAGARAJAN, Sivakumar, Charlotte, 28202 (US)
(74) Representative: Ingrassia, Fisher & Lorenz UK Ltd.

(57) **Abstract**

A system and method includes receiving message instructions to operate a vehicle and originating externally from the vehicle, and generating message instruction tasks to be performed to operate the vehicle and by using the message instructions. The method also includes generating operational tasks to be performed to operate the vehicle originating from other than the message instructions, and determining a workload of at least one vehicle operator of the vehicle comprising factoring characteristics of the message instruction tasks or operational tasks or both to be performed. The method includes generating at least one task list and depends on the workload of the vehicle operator. Each task list provides one or more message instruction tasks and one or more operational tasks. The method includes transmitting data of at least one of the task lists from the vehicle to a location remote from the vehicle receive a responding task message.

## Description

### CROSS REFERENCE TO RELATED APPLICATION

This application claims priority to India Provisional Patent Application No. 202511017364, filed February 27, 2025, the entire content of which is incorporated by reference herein.

### TECHNICAL FIELD

The subject matter described herein generally relates to vehicle systems, and more particularly, to checklist management for vehicles.

### BACKGROUND

For vehicles such as aircraft, a checklist of tasks to be performed may be provided to pilots during various phases of a mission, whether pre-flight, during a flight, or post-flight. These checklists often involve tasks with various levels of complexity and urgency that are to be performed during busy phases of the flight, such as push back, taxi out, take-off, initial climb, and emergency situations, but then leave idle durations that may increase fatigue of a pilot and are not organized in any practical manner for easy viewing and operation of the task lists. Thus, the performance of the tasks on the checklists can be inefficient, cumbersome, and detrimental to the situational awareness of the pilots when the assignment of the tasks to the task lists does not factor the workload of the aircrew members, the necessity to perform tasks at certain times, the separate treatment of broadcast messages such as clearance messages from an air traffic control, and many other factors. Hence, it is desirable to provide a vehicle method and system that provides efficient list generation, convenient task list display, and task list management that maintains the attentiveness of the pilots so that more of the tasks are completed and performed properly.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one example implementation, a method includes receiving message instructions to operate a vehicle and originating externally from the vehicle, and generating, by at least one processor, message instruction tasks to be performed to operate the vehicle and by using the message instructions. The method also includes generating, by at least one processor, operational tasks to be performed to operate the vehicle originating from other than the message instructions, and determining, by at least one processor, a workload of at least one vehicle operator of the vehicle comprising factoring characteristics of the message instruction tasks or operational tasks or both to be performed. The method includes generating, by at least one processor, at least one task list to be performed by the at least one vehicle operator. The inclusion of a task on the at least one task list depends on the workload of the at least one vehicle operator, and each task list provides (1) one or more message instruction tasks, (2) one or more operational tasks, or both (1) and (2) in a single task list. The method includes displaying the at least one task list at a display device on the vehicle, and transmitting data of at least one of the task lists from the vehicle and to a location remote from the vehicle. In response to the transmission, the method includes receiving data on the vehicle that automatically provides a task message to be displayed on the vehicle that provides directions related to at least one of the tasks on at least one of the task lists.

In another example implementation, a system includes memory and processing circuitry forming at least one processor communicatively coupled to the memory and being arranged to operate by receiving message instructions to operate a vehicle and originating externally from the vehicle, and generating message instruction tasks to be performed to operate the vehicle and by using the message instructions. The processor is arranged to operate by generating operational tasks to be performed to operate the vehicle originating from other than the message instructions, and determining a workload of at least one vehicle operator of the vehicle comprising factoring characteristics of the message instruction tasks or operational task or both to be performed. The processor is arranged to operate by generating at least one task list to be performed by the at least one vehicle operator. The inclusion of a task on the at least one task list depends on the workload of the at least one vehicle operator, and each task list provides one or more message instruction tasks, (2) one or more operational tasks, or both (1) and (2) in a single task list. The processor is arranged to operate by displaying the at least one task list on a display device on the vehicle, and in response to displaying the at least one task list, receiving feedback by use of a user input device on the vehicle and that indicates one or more reasons at least one task on the at least one task list cannot be performed.

In yet another example implementation, at least one non-transitory computer-readable medium having instructions thereon, cause a computing device to operate by receiving message instructions to operate a vehicle, received on the vehicle, and originating externally from the vehicle. The message instructions originate as an audio message or a datalink message. The computing device is caused to operate by generating message instruction tasks to be performed to operate the vehicle and by using the message instructions, generating operational tasks to be performed to operate the vehicle originating from other than the message instructions, and determining a workload of at least one vehicle operator of the vehicle comprising factoring characteristics of the message instruction tasks or operational tasks or both to be performed. The computing device is caused to operate by generating at least one task list to be performed by the at least one vehicle operator. The inclusion of a task on the at least one task list depends on the workload of the at least one vehicle operator, and each task list provides one or more message instruction tasks and one or more operational tasks in a single task list. The computing device is caused to operate by displaying the at least one task list on a display device on the vehicle, transmitting data of at least one of the task lists from the vehicle and to a remote location, and in response to the transmission, receiving data on the vehicle that automatically provides a task message to be displayed on the vehicle and that provides directions related to at least one of the tasks on the at least one task lists. In response to displaying the at least one task list, the computing device is caused to operate by receiving feedback by use of a user input device on the vehicle and that indicates one or more reasons at least one task on the at least one task list cannot be performed.

Furthermore, other desirable features and characteristics of the system and method disclosed herein will become apparent from the subsequent detailed description and the appended claims, taken in conjunction with the accompanying drawings and the preceding background.

### BRIEF DESCRIPTION OF THE DRAWINGS

Implementations of the subject matter will hereinafter be described in conjunction with the following drawing figures, wherein like numerals denote like elements, and:
FIG. 1 is a schematic diagram of an example aircraft system according to at least one of the implementations herein;
FIG. 2 is a schematic diagram of an example system of task list generation and management for a vehicle task checklist according to at least one of the implementations disclosed herein;
FIG. 3 is a schematic diagram of an example task list generation model for generating a vehicle task checklist according to at least one of the implementations disclosed herein;
FIGS. 4A-4B is a flow chart of an example method of vehicle task list generation and management according to at least one of the implementations disclosed herein;
FIG. 5 is a schematic diagram of an example avionics page display with a task list according to at least one of the implementations disclosed herein;
FIG. 6 is a schematic diagram of another example avionics page display with another task list according to at least one of the implementations disclosed herein;
FIG. 7 is a schematic diagram of yet another example avionics page display with a de-briefing task list according to at least one of the implementations disclosed herein; and
FIG. 8 is a schematic diagram of a further example avionics page display with another de-briefing task list according to at least one of the implementations disclosed herein.

### DETAILED DESCRIPTION

The following detailed description includes example implementations that are not intended to limit the subject matter of the application and uses thereof. Furthermore, there is no intention to be bound by any theory presented in the preceding background, brief summary, or the following detailed description.

Implementations of the subject matter described herein relate to systems and methods that provide efficient task list (or checklist) generation and management. This involves generating task lists from audio or data messages from external vehicle information sources, such as an air traffic control (ATC) or ground control, and combining these tasks with operational tasks to form combined task lists. The operational tasks are generated from numerous sources including standard operating procedures (SOPs) and aircraft flight manuals (AFMs), real-time monitoring of the current context of the vehicle or aircraft, the avionics systems used on the aircraft, preferences of the pilots, and so forth. The workload of the pilots or aircrew is monitored to provide other task list management procedures that automatically allocate tasks to different crew members, phases of the flight, and so forth to better evenly distribute the workload. After the task lists are displayed, the task lists may be adjusted based on pilot feedback during a flight or as a result of de-briefing after a flight.

Also, the task lists and the status of the tasks may be transmitted to a remote site with an off-board system, such as at a control center, where the task list performance may be monitored further for analysis and de-briefing. The off-board system also may provide messages back to the aircraft during a flight that remind the pilots of forgotten or skipped tasks on the task lists or with other messages. Otherwise, the off-board system may transmit control signals to the aircraft to automatically activate task performance of tasks on the task lists. This may be accomplished completely autonomously or by having a remote off-board pilot (or vehicle operator) controlling the messages and control signals transmitted back to the aircraft.

By factoring workload and other factors being used to provide the task lists, the method and system disclosed herein increases pilot attentiveness while providing a convenient and practical task lists system that is easy for the pilots to understand and operate, thereby increasing the situational awareness of the pilots while reducing the cognitive workload to operate the task list system disclosed herein.

Referring to FIG, 1 for one implementation, an example aircraft system 100 is in accordance with the disclosed implementations. The aircraft system 100 includes at least one vehicle 101, such as an aircraft 102. Alternatively, any other vehicles using digital checklists may be used instead such as any watercraft, landcraft (such as trucks or automobiles), spacecraft, and so forth. As one other alternative, at least one remote system 150 may be used to communicate with the vehicle 101 to assist with managing task lists. The remote system 150 may be located at a ground airline or vehicle control center or base, an airline flight operation (FlightOps) base, a dispatch team base, a maintenance base (or ground maintenance), and so forth. In addition to the implementations mentioned below, the remote system 150 may be realized as a cloud or remote information technology (IT) or control center, or otherwise as a maintenance or software update data center or a distributed network of remote control centers that reside at geographic locations that are separate and distinct from one or more edge computing systems that communicate directly with a controller or processor on the aircraft 102. It should be noted that the phrases checklist and task list are used interchangeably unless context indicates otherwise. Also, the terms vehicle operator, pilot, user, co-pilot, crew, and aircrew are all used interchangeably and each indicate one or more vehicle operators unless the context indicates otherwise.

In an example implementation, the system 100 is at least partially on the aircraft 102 and includes, without limitation, one or more user input devices 103 that may have one or more microphones 104, a display device 106, one or more processors 108, a display system 110, a communications system 112 with a radio 114, avionics systems 116 that may include at least a flight management system (FMS) 118 and a navigation system 120, a task list unit or system 122, a data storage element 124, and sensors 126. The communications system 112 also may include an antenna 130, which may wirelessly transmit data to and receive data from various external entities physically and/or geographically remote to the aircraft 102 such as the remote system 150 and an ATC.

In example implementations, the display device 106 is an electronic display capable of graphically displaying flight information or other data associated with operation of the aircraft under control of the display system 110 and/or processor 108. In this example, the display device 106 is coupled to the display system 110 and the processor 108, and the processor 108 and the display device 106 are cooperatively configured to display, render, or otherwise convey one or more graphical representations or images associated with operation of the aircraft on the display device 106, and particularly at least one or more checklist-related pages or windows (or overlays) that show task lists related to message instructions and/or operational tasks to be performed to operate the vehicle as described herein. The task lists may be rendered on or over avionics pages used to operate the vehicle, such as a primary flight display (PFD) or a navigation display (ND) to name a couple of examples.

The user input device 103 is coupled to the processor(s) 108 and may or may not be considered entirely or partially part of display device 106. The user input device 103 and the processor 108 are cooperatively configured to allow a user (e.g., a vehicle operator or a pilot) to interact with the display device 106 and/or other elements of the system 100, as described in greater detail below. By one form, the display device 106 is or has one or more graphical user interfaces (GUIs), and may include or be communicatively coupled to, the user input device 102. Depending on the implementation, the user input device(s) 103 may be a keypad or keyboard (whether physical or virtual), touchpad, mouse, touch panel (or touchscreen), joystick, knob, line select key, and/or another suitable device adapted to receive input from a user. This may include touch screens over the display device 106 to receive signals to activate a button, toggle, menu options, or other graphical user interface (GUI) arrangements. This also may include a data entry field and the values or words to be input into that field is typed or selected from a menu. In some example implementations, the user input device 103 includes an audio input device, such as the microphone 104, audio transducer, audio sensor, or the like, which is adapted to allow a user to provide audio input to the system 100 in a "hands free" manner using speech recognition described below.

The processor 108 is at least one processor formed by processor circuitry and includes the hardware, software, and/or firmware components configured to operate any of the units described herein, to facilitate communications and/or interaction between the elements of the system 100, and to perform additional tasks and/or functions to support operation of the system 100, as described in greater detail below. Depending on the implementation, the processor 108 may be one or more of a general purpose processor such as a central processing unit (CPU), a content addressable memory, a digital signal processor (DSP), an application specific integrated circuit, a field programmable gate array, any suitable programmable logic device, discrete gate or transistor logic, processing core(s), discrete hardware components, or any combination thereof, designed to perform the functions described herein. The processor 108 also may be implemented as a combination of computing devices, e.g., a plurality of processing cores, a combination of a digital signal processor and a microprocessor, a plurality of microprocessors, one or more microprocessors in conjunction with a digital signal processor core, a System on a Chip (SoC), or any other such suitable configuration or combination. In practice, the processor 108 includes processing logic that may be configured to perform the functions, techniques, and processing tasks associated with the operation of the system 100, as described in greater detail below. Furthermore, the steps of a method or algorithm described in connection with the implementations disclosed herein may be embodied directly in hardware, in firmware, in a software module (or unit) executed by the processor 108, or in any practical combination thereof. For example, in one or more implementations, the processor 108 includes or otherwise accesses the data storage element (or memory) 124, which may be realized as any suitable non-transitory short or long term storage media capable of storing programming instructions for execution by the processor 108. The code or other computer-executable programming instructions, when read and executed by the processor 108 (or computing device), cause the processor 108 to support or otherwise perform certain tasks, operations, functions, and/or processes described herein. By one form, the processor 108 is or is part of a controller.

The display system 110 is the hardware, software, and/or firmware components configured to control the display and/or rendering of the checklists described herein, one or more navigational maps, and/or other displays pertaining to operation of the aircraft and/or onboard systems or units 112, 116, 118, 120, and 122 and displayed on the display device 106. In this regard, the display system 110 may access or include one or more avionics databases (or avionics systems 208) suitably configured to support operations of the display system 110, such as, for example, a terrain database, an obstacle database, a navigational database, a geopolitical database, a terminal airspace database, a special use airspace database, or other information for rendering and/or displaying navigational maps and/or other content on the display device 106.

In the illustrated implementation, the aircraft system 100 includes a data storage element 124, which contains databases to operate the aircraft such as those mentioned above and to operate the task list system 122 described below and may include task list input databases that are used to determine the task lists. Depending on the implementation, the data storage element 124 may be physically realized using RAM memory, ROM memory, flash memory, cache, registers, a hard disk, or another suitable data storage medium known in the art or any suitable combination thereof.

In the present example, the processor 108 is coupled to the FMS 118 that collects data indicating the current state of the aircraft as well as input from the aircrew and/or external air traffic entities such as the air traffic control (ATC). The FMS 118 then generates flight plans and activates an automatic pilot to operate the aircraft. Particularly, the FMS 118 automates flight planning, navigation, performance management, and guidance to reduce pilot workload and enhance operational efficiency. Once the FMS 118 processes the various inputs and computes the optimal flight path, the FMS 118 communicates the flight plan to the autopilot and other avionics systems. Additionally, the FMS 118 may calculate fuel consumption, estimated time of arrival, and required thrust settings for different flight phases.

The navigation system 120 is configured to provide real-time navigational data and/or information regarding operation of the aircraft. The navigation system 120 may be realized as a global positioning system (GPS), inertial reference system (IRS), or a radio-based navigation system (e.g., VHF omni-directional radio range or long range aid to navigation (LORAN)), and may include one or more navigational radios or other sensors suitably configured to support operation of the navigation system 120, as will be appreciated in the art. The navigation system 120 is capable of obtaining and/or determining the instantaneous position and heading of the aircraft, that is, the current (or instantaneous) location of the aircraft (e.g., the current latitude and longitude) and the current (or instantaneous) altitude or above ground level for the aircraft.

In the illustrated implementation, the processor 108 also is coupled to the communications system 112, which is configured to support communications to and/or from the aircraft. For example, the communications system 112 may support communications between the aircraft and an air traffic control or another suitable command center or ground location such as remote system 150. Thus, the communications system 112 may be realized using a radio communication system or device (or unit) 114 and/or another suitable data link system. The communications system(s) 112 is, has, or communicates with the avionics systems 116 or other external sources, such as, for example, other aircraft, an air traffic controller, or the like.

By one alternative form, the processor 108 may use the communications system 112 to provide monitoring data to the remote system 150 that is used to assist with managing and analyzing the task lists used on the aircraft 102. The remote system 150 may include a communications unit or system 152 and an antenna 134, which may wirelessly transmit data to and receive data from various external sources physically and/or geographically remote to the remote system 150, such as to receive monitored data from the aircraft and transmit task-related messages or control commands to the aircraft 102 as described herein. In this case, bidirectional wireless data exchange may occur via the communications systems 112 and 152 or other remote systems over a communications network 132, such as a public or private network implemented in accordance with Transmission Control Protocol/Internet Protocol architectures (WiFi) or other conventional protocol standards. Encryption and mutual authentication techniques may be applied, as appropriate, to ensure data security.

In various implementations, each of the communications systems 112 and 152 are configured to support instantaneous (i.e., real-time or current) communications between various systems. The communications systems 112 and 152 may each incorporate one or more transmitters, receivers, and the supporting communications hardware and software required for components of the system 100 to communicate as described herein. The network 132 used for communication may be a wireless gateway such as a datalink management wireless (DLM-W) system that provides communication among systems within a cockpit and on an aircraft as well as transmission between the aircraft and the ground, a controller-pilot datalink communications (CPDLC) system, an aeronautical operational control (AOC) communications system, Aircraft Communication Addressing and Reporting System (ACARS), which uses very high frequency (VHF), HF, or satellite communication (SATCOM) (whether via Wi-Fi or other network), VHF Data Link (VDL), High-Frequency Data Link (HFDL), and air-to-ground (ATG) systems. Other networks may be used when the aircraft 102 is on the ground such as cellular networks and ground Wi-Fi Networks while an aircraft is at a gate, taxiing, or at a remote location on the ground from a specific maintenance base, and/or the like. Any combination of these may be used. In various implementations, one or both the communications systems 112 and 152 may include additional communications not directly relied upon herein, such as bidirectional pilot-to-ATC (air traffic control) communications via a datalink, and any other suitable radio communication system that supports communications between the aircraft 102 (and/or the remote system 150) and various external source(s). In the case of datalinks, audio messages may be pre-transcribed into digital messages that are then transmitted to the avionics systems 116 on the aircraft via the communications system 112. The communications described herein also may apply to transmission to the display devices where suitable.

In example implementations, the processor 108 is also coupled to the avionics systems 116 including the FMS 118, which is coupled to the navigation system 120 and other avionics systems to support navigation, flight planning, and other aircraft control functions, as well as to provide real-time data and/or information regarding the operational status of the aircraft to the processor 108. The system 100 and/or aircraft 102 may include numerous other avionics systems for obtaining and/or providing real-time flight-related information that may be displayed on avionics displays on the display device 106 or otherwise provided to a vehicle operator (e.g., a pilot). For example, practical implementations of the system 100 and/or aircraft will likely include one or more of the following avionics systems 116 suitably configured to support operation of the aircraft: a weather system, an air traffic management system, a radar system, a traffic avoidance system, an autopilot system, an auto-thrust system, a flight control system, hydraulics systems, pneumatics systems, environmental systems, electrical systems, engine systems, trim systems, lighting systems, crew alerting systems, electronic checklist systems, an electronic flight bag (EFB) and/or another suitable avionics system. The task list system 122 may be considered part of, or an add on to, general avionics systems such as a communications management unit (CMU) that handles datalink systems and manages the ACARS and CPDLC messaging, a communication management function (CMF) system that maybe part of the CMU or an air traffic services unit (ATSU), or any special purpose operations (SPO) system with specific function/mission software.

As an unlimited list, the sensors 126 (or sensor system) may be used to monitor the real-time state of the vehicle and this may include monitoring of engines (manifolds, turbines, fuel delivery, vibration levels), hydraulic systems (pressure levels, fluid flow, control surfaces such as flaps, landing gear, and brakes), fuel systems (fuel pressure, flow rate, moisture levels), environmental control systems (cabin pressurization, airflow, oxygen levels), flight control systems (position of ailerons, elevators, rudders, flaps), landing gear (retraction, position, hydraulic pressure), electrical systems (voltage, current levels, potential leaks, smoke detection), cabin and cockpit (oxygen levels, smoke, fire, temperature, passenger comfort systems, electronic passenger communication and entertainment systems, and so forth), avionics and airframe (vibration, corrosion detection, temperature, fluid leaks), and emergency oxygen systems (oxygen flow). Others not listed here may be used as well.

Otherwise, in various implementations, sensors 126 also may be used for aircraft motion control and navigation while providing sensor data for monitoring purposes. In this case, the sensors 126 supplies, without limitation, one or more of: inertial reference system measurements providing a location, Flight Path Angle (FPA) measurements, airspeed data, groundspeed data, vertical speed data, vertical acceleration data, altitude data, attitude data including pitch and roll measurements, yaw data, data related to ownship weight, time/date information, heading information, data related to atmospheric conditions, flight path data, flight track data, radar altitude data, geometric altitude data, wind speed and direction data.

The type of sensors 126 providing data on the aircraft to perform the monitoring may include temperature sensors (thermocouples, resistance temperature detectors, infrared sensors), pressure sensors (manifold pressure sensors, fuel pressure sensors, hydraulic pressure sensors, cabin pressure sensors), vibration sensors (accelerometers, piezoelectric sensors), flow sensors (fuel flow sensors, airflow sensors, oil flow sensors), position sensors (potentiometers, linear variable differential transformers, rotary encoders), proximity sensors (inductive sensors, capacitive sensors, optical sensors), oxygen sensors (oxygen depletion sensors, oxygen flow sensors), voltage and current sensors (voltage sensors, current sensors), leak detection sensors (fluid leak sensors, gas leak sensors), smoke and fire sensors (smoke detectors, heat sensors), and chemical sensors (corrosion detection sensors, moisture sensors). Others may be used that are not listed here.

The term sensor (and in turn the sensors 126) includes software diagnostic applications in addition to mechanical or physical sensors. Thus, a continuous monitoring application or system, or a built-in-test (BIT) type of application, may be referred to as, or is included as, sensors for the purposes of describing the present application herein. Thus, the monitoring of avionics systems 208 such as the autopilot, navigation, and/or flight management systems (FMS) to name a few examples may be monitoring real-time task execution, CPU loads, memory usage, data integrity, error logging, redundancy management, and so forth, in addition to providing expected parameter values to be compared to actual parameter values generated from physical sensors on aircraft physical components.

Also, specifically for monitoring the status of an aircrew or crew workload, the sensors 126 may include gaze tracking, eye-tracking, and gesture tracking sensors such as cameras, Galvanic Skin Response (GSR): GSR sensors may be used to measure skin conductance, which correlates with stress levels. Electromyography (EMG) sensors detect muscle tension, which can be an indicator of mental or physical stress. Speech and Voice Analysis auditory sensors may analyze speech patterns that can be used to assess stress levels, cognitive load, mental fatigue, or emotional distress. Oxygen Saturation Sensors (Pulse Oximeters) may measure oxygen saturation levels that can also indicate stress or fatigue in the pilot. Accelerometers and Motion Sensors may be used to detect physical movement and posture changes, which can indicate a level of comfort or fatigue, as well as stress. Cockpit Environment Sensors may measure environmental factors such as temperature, pressure, noise, and light that may contribute to stress.

Other sensors 126 may include thermal imaging and/or infrared sensors that may be used to detect significant fluctuations or elevated temperatures that can indicate physical or cognitive stress, fatigue, or even illness. Thermal monitoring can be used to detect such variations. Respiration monitors may be used to track breathing patterns. Pupillometry monitors may be used to measure changes in pupil size, which can vary depending on cognitive load, stress, or fatigue. Electrodermal activity (EDA) sensors may track the full electrodermal response of the vehicle operators. Performance metrics or task load index (NASA-TLX) may be used to assess mental workload. Pilots or crew members can self-report perceived workload levels, and these are sometimes combined with real-time sensor data (like eye-tracking or GSR) to get a fuller picture of cognitive load during specific tasks. Task performance metrics (such as data from the FMS), flight instruments, and other in-cockpit interfaces indicate the complexity and workload associated with specific tasks that can provide indirect information about cognitive load. All of these sensors, combined with machine learning or other data processing tools, can provide a comprehensive picture of crew workload, stress, and cognitive state.

As to the alternative with the remote system 150, the remote system 150 also may have an off-board (OB) processor 154 similar to, or the same as, processor 108, an off-board (OB) memory 162 as described with data storage element 124, an OB system 156 to monitor and manage task lists, and an OB user input device(s) 158 and an OB display device 160 so that an off-board vehicle operator (or pilot in the case of aircraft) can operate the OB system 156 when the OB system 156 has manual procedures to monitor and manage the tasks lists of the vehicle 101. Other details of the OB system 156 are provided below.

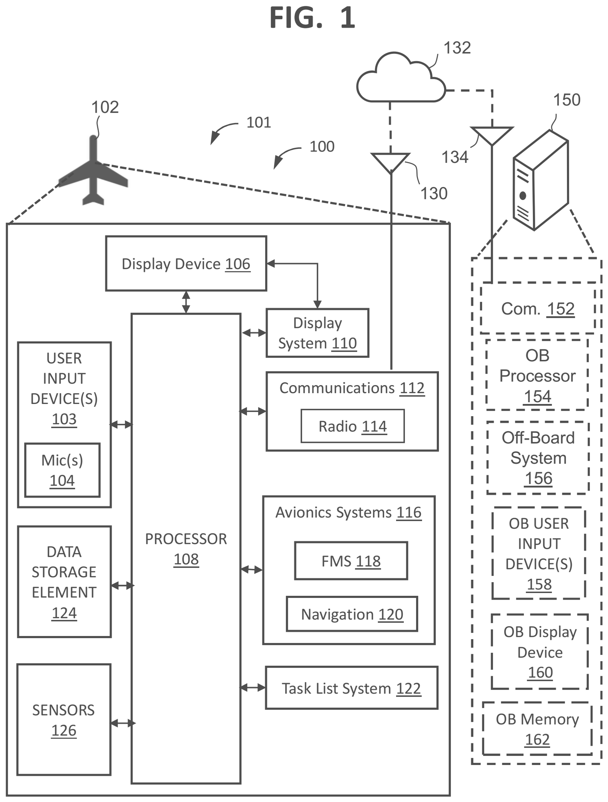

It should be understood that FIG. 1 is a simplified representation of the system 100 for purposes of explanation and ease of description, and FIG. 1 is not intended to limit the application or scope of the subject matter described herein in any way. It should be appreciated that any of the systems, units, and devices of system 100 may be entirely onboard the aircraft or partially onboard and partially remote from the aircraft. By one form, at least the display device 106 and sensors 126 are entirely onboard. Those parts of systems, modules, and units of system 100 external to the aircraft may be communicatively coupled to the remaining elements or parts of the system 100 on the aircraft (e.g., via a data link and/or communications system 112). Similarly, in some implementations, the data storage element 124 may be located externally to the aircraft and communicatively coupled to the processor 108 via a data link and/or communications system 112. Furthermore, practical implementations of the system 100 and/or aircraft will include numerous other devices and components for providing additional functions and features, as will be appreciated in the art. In this regard, it will be appreciated that although FIG. 1 shows a single display device 106, in practice, additional display devices may be present onboard the aircraft. Additionally, it should be noted that in other implementations, features and/or functionality of processor 108 described herein can be implemented by or otherwise integrated with the features and/or functionality provided by the FMS 118. In other words, some implementations may integrate the processor 108 with the FMS 118. In yet other implementations, various aspects of the subject matter described herein may be implemented by or at an electronic flight bag (EFB) or similar mobile electronic device that is communicatively coupled to the processor 108 and/or the FMS 118 (or has the processor 108). Thus, the display device 106 may be a mobile device that displays one or more checklist-related pages as described herein at least while the display device 106 is aboard the aircraft.

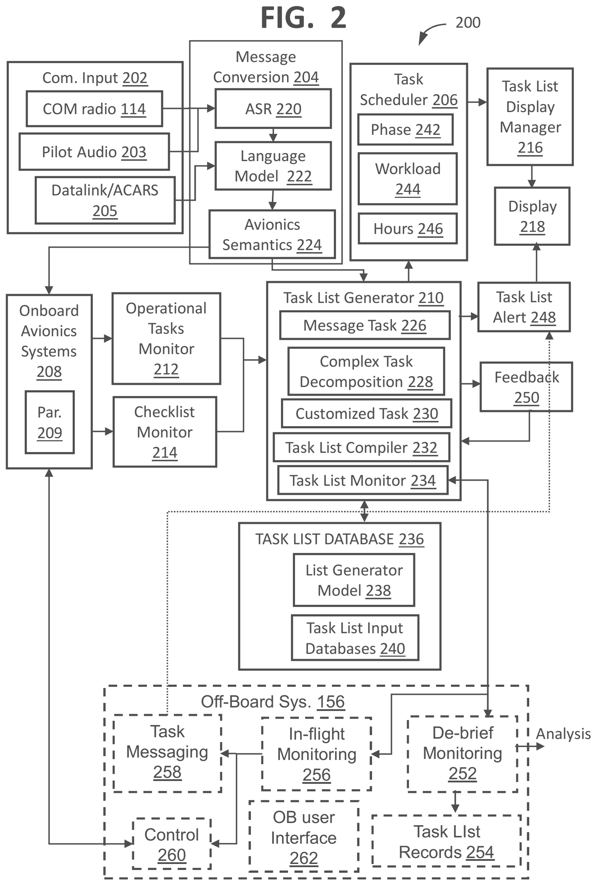

Referring to FIG. 2, a task list system 200, the same or similar to task list system 122, generates and manages task lists, and assigns the tasks and/or task lists to vehicle operators (and/or display locations on the vehicle) and that are used to operate the vehicle 101. The task list system 200 is operated by the processor 108. In one or more example implementations, the task list system 200 may be implemented or otherwise provided entirely onboard a vehicle, such as on the aircraft 102. However, in alternative implementations, the tasks list system 200 may be at least partially implemented independent of any aircraft or vehicle, except for a display device and sensors on the vehicle 101 that communicates remotely with other units of the task list system 200 and shows the tasks lists on the aircraft or vehicle.

The example task list system 200 here includes, or is communicatively coupled to, a communications input unit 202, a message conversion unit 204, a task scheduler unit 206, onboard avionics systems 208, a task list generator unit 210, a task list database 236 that has a list generation model 238 operated by the task list generator unit 210 and a task list input database 240. The task list system 200 also may include a task list alert unit 248 and a feedback unit 250. The task list system 200 also may include a task list display manager 216, which may be, accompany, or include the display system 110, and a display 218.

The communications input unit 202 receives audio or data messages from external entities, such as an air traffic control (ATC), so the messages can be converted into relevant tasks to be performed. Thus, the communications input unit 202, as with communications system 112, may include the communication radio 114 to receive audio messages from the ATC or other external vehicle information source or entity, or from an off-board vehicle operator at the OB system 156. Otherwise, a message or pilot audio unit 203 may receive audio from a pilot speaking in the cockpit of the aircraft. Data messages may be received by a datalink/ACARS unit 205 or other similar unit. The audio messages may be provided to the message conversion unit 204, and specifically an automatic speech recognition unit 220 that converts the audio signals into words. This may include any needed voice recognition operations to capture the audio input signals using the microphone 104 and converts the signals into a digital waveform, performs key feature extraction into phoneme, and decoding such as with a Weighted Finite State Transducer (WFST) or other neural network. A language model unit 222 then constructs the sentences and phrases being spoken and may use post-processing techniques including grammatical corrections. An avionics semantics unit 224 then is applied to recognize the avionics language in the audio or data messages including any message instructions. This may include a command to move to a target parameter (such as an elevation or lateral location such as a waypoint) or to perform a certain maneuver, and so forth. The commands, instructions, target parameters, and so forth, generally referred to as message instructions, are then provided to the task list generator unit 210.

Simultaneously, the onboard avionics systems 208 may generate tasks whether in reaction to the monitored state of the aircraft, commands or parameters input by the vehicle operators, or also in response to the message instructions to generate tasks for the task lists. This may be instead of the message instruction tasks generated directly from the message conversion unit 204. In this regard, and whether the avionics systems 208 are providing message instructions tasks or the task list generator unit 210 (and message task unit 226) are generating the message instruction tasks, the avionics systems 208 (or another unit or system) may have a parameter unit (or parameter matching unit) 209 that matches the requested parameters from the message instructions (or other source) to parameters input to the system by the vehicle operator (or other system or entity) entering an input parameter, such as an altitude value, to better ensure the correct parameter was input. This is explained in greater detail with operation 442 of process 400 below.

By one example form, the avionics systems 208 include at least the FMS, a flight control (FC) system, a weather radar (WX) system, a traffic collision avoidance system (TCAS), a fuel management system, an electrical system, an engine control system, and a hydraulics system, in addition to any of the other avionics systems mentioned herein.

An operational tasks monitor unit 212 may receive the tasks to be performed from the avionics systems and add them to tasks determined by monitoring the real-time state or context of the vehicles and preferences of the pilots to collectively generate operational tasks that are to be performed. A checklist monitor unit 214 may monitor the existing checklists including the operational tasks to check the status of the tasks and determine which operational tasks still need to be performed. The tasks are then provided to the task list generator unit 210.

The task list generator unit 210 may include a message task unit 226, a complex task decomposition unit 228, a customized task unit 230, a task list compiler 232, and a task list monitor 234. The message task unit 226 generates the message instructions tasks received form the external sources, such as the ATC. The complex task decomposition unit 228 determines whether a task is too complex to list as a single operation, and if so, decomposes the complex task into a list of sub-tasks to be added to the task lists for display to the pilots. Otherwise, an option exists and is described below to receive feedback from the pilot that a task is too complicated to perform. These are explained with process 400 below.

The task list generator unit 210 also may have a customized task unit 230 that may receive a task from a pilot or autonomously generated task from one of the avionics systems 208 for example, and that is added to the task lists.

A task list compiler 232 collects the tasks into task lists according to a list generation model 238 stored on a task list database 236 and that uses task list input databases.

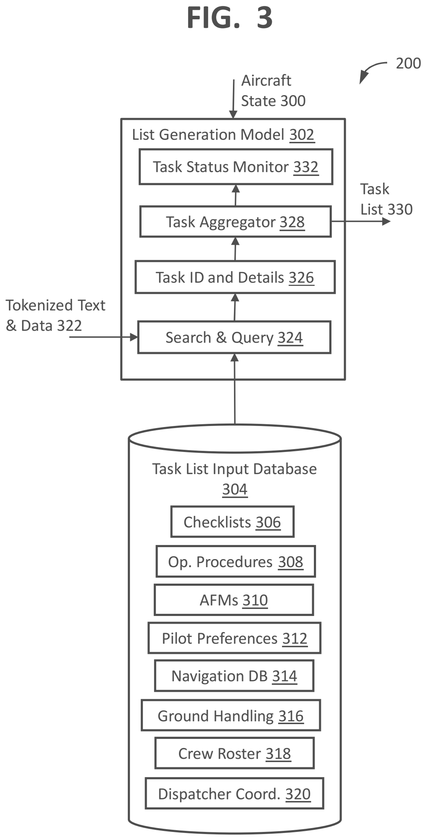

Referring to FIG. 3 for example, an example list generation model 302 is the same or similar to list generator model 238, and task list input databases 240 is a collection of databases of the task list input database 304. In detail, the list generation model 302 may have a search and query unit 324, a task ID and details unit 326, a task aggregator unit 328, and a task status monitor unit 332.

The task list input database 304 includes one or more physically or virtually defined databases that may be on the same physical memory or separate at different physical locations or different memories. The databases may include checklists database 306 that includes previously used checklists, operational procedures database 308 and aircraft flight manual (AFM) database 310 that include standard task lists or task lists established by the aircraft or vehicle manufacturer or provider, pilot preference database 312 that includes task preferences gained from pilot experience, and may be provided for specific pilots (by name or company ID, etc.), navigation database 314 that provides predetermined navigation task lists that may or may not be modified in light of the current real-time context of the aircraft or as adjusted due to the message instructions, ground handling database 316 similar to the navigation DB 314 provides task lists usually performed on the ground and often related to the airside travel including taxiing and runways, etc., crew roster database 318 that includes vehicle operator ID, experience, and other relevant specifications of a pilot or vehicle operator, and a dispatcher coordination (or flight operations or dispatch coordination) database 320 that holds data from dispatchers such as flight plan data, operational updates (such as delays, diversions, maintenance issues), and so forth.

The task list generator unit 210 operates the list generation model 302 to assign tasks to task lists. Specifically, the search and query unit 324 receives the data of the parameters and commands from the message instructions (which may be in tokenized text form) as well as the aircraft state 300 from the operational tasks monitoring unit 212 when the operational tasks are not already established by the operational tasks monitoring unit 212 or the avionics systems 208. The list generation model 302 looks up the language or aircraft state data in the databases of the task list input database 304, often provided in tables. The list generation model 302 then has the Task ID and Details unit 326 to provide IDs and obtain details of the retrieved tasks or task lists relevant to deciding whether and how to perform a task. Then, the task aggregator unit 328 then sets the order and placement of the tasks into the task lists.

In order to select or generate the tasks, the list generation model 302 may use rule-based systems, fuzzy logic, machine learning, neural networks, reinforcement learning, multi-criteria decision making, Markov decision processes, adaptive control systems, genetic algorithms, or others, and any combination of these.

Returning to FIG. 2, task list monitor 234, and more precisely, the task list compiler 232 generates the data of the task lists according to the task list data 330 from the task aggregator unit 328 to provide the task lists to the task scheduler unit 206.

The task scheduler unit 206 (also referred to as a task list enhancer or modifier unit) has a phase unit 242 to modify the timing of the tasks or change tasks among the task lists to provide a more uniform workflow throughout the phases of a mission. This includes reducing the amount of tasks (or work needed to perform one or more tasks) during busy phases and increasing the number or work on tasks during slow phases. A workload unit 244 monitors both the expected and actual workload of the individual vehicle operators so that the tasks can be allocated more evenly among the vehicle operators so that no one vehicle operator is overworked or underworked. An hours (or hour tracking) unit 246 may be provided to track the hours worked, an idle duration, a duty period duration, and so forth for each vehicle operator. The tasks can then be shifted among the tasks lists and/or the vehicle operators, again, so that none of the vehicle operators become unnecessarily fatigued. Once the tasks are assigned to a task list and scheduled, the generated task list may be stored in the checklists database 306.

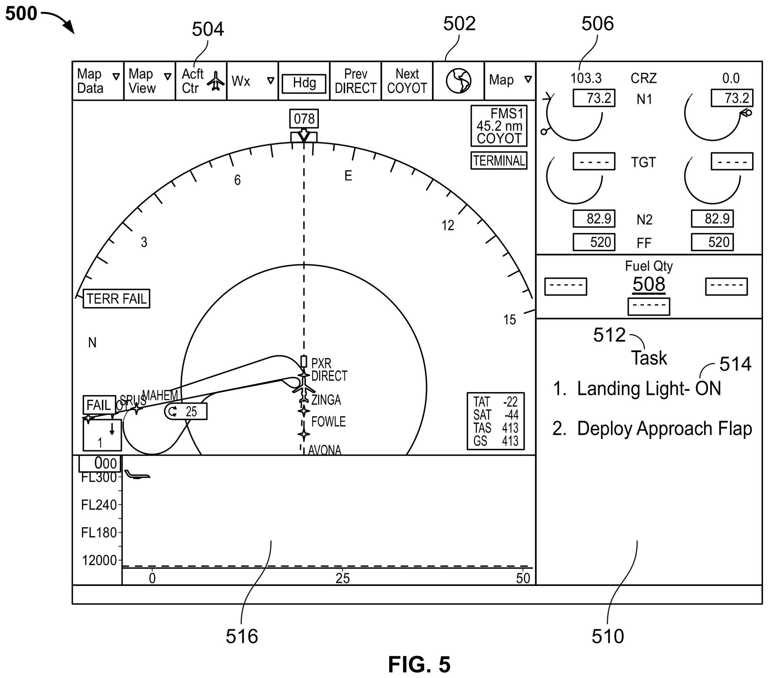

The task list display manager 216 receives the data of task lists ready for display on the display 218 on display device 106 and generates the desired image data to render the generated task lists. This may include displaying the task lists on avionics pages as described below as windows and as predetermined areas of a display or as overlays on the avionics pages as shown on FIGS. 5-8 and described below with process 400. Otherwise, dedicated task list pages may be used instead. The task list display manager 216 also controls the display of the task list areas, windows, or pages when the system is activated if it does not have an "always on" mode. This may include displaying task list menu or settings windows or pages, alert pages or windows, and/or feedback windows or pages that display GUIs to receive input from a vehicle operator as described below. The image data ready for rendering is then provided to the display device 106 for display of the task list image or other related images on the display 218. It will be appreciated herein that the terms display, image, page, and picture may be used interchangeably to represent a rendering on the display device 106 and display 218.

A task list alert unit 248 provides various alerts to the vehicle operators on the vehicle or aircraft, and may be used to inform the vehicle operators of a change in the task lists, or as a reminder about a task that was inadvertently skipped or forgotten. The alerts also may provide an alert for vehicle operators that are on break or idle to resume vehicle driving or flying duties. These are discussed in detail below.

A feedback unit 250 provides data to display a feedback page or window with GUIs of a user interface of user input device 103 and that receives input from a vehicle operator providing information regarding at least one of the tasks on a task list on one of the displays. The feedback may provide information that a task is too complex and should be decomposed into sub-tasks or that a complex task cannot be performed or completed at all.

The vehicle operator may enter selections, parameter values, or text by touchscreen, hardware, virtual keypad or keyboard, touchscreen keypad or keyboard, mouse and virtual keypad or keyboard, and so forth forming at least part of the interface or user input device 103 to enter or update the displayed task lists. Upon receiving vehicle operator feedback information, the task list generator unit 210 then may generate revised task lists to be displayed and executed.

As to the remote system 150 and the OB system 156, the OB system 156 may perform remote monitoring by a de-brief monitoring unit 252 that receives task lists and task status to record the data in a task list records unit 254, which also may be part of the checklists database 306 (or *vice-versa*). The received monitoring data includes both status and information of tasks that were performed and those tasks that were not performed. The de-briefing analysis can then be performed remotely to improve the task lists and task list execution. The in-flight monitoring unit 256 may receive the same data in addition to any real-time monitoring data from the aircraft to have a full situational understanding of the real-time context or state of the vehicle or aircraft. With this level of data, the task messaging unit 258 can analyze the status of the tasks, and determine if any tasks were inadvertently (rather than intentionally) skipped. In this case, a message may be sent to the aircraft and to the task list alert unit 248 to place an alert on display 218 or another interface such as an audio system to remind the vehicle operators to perform the missed task. Alternatively, a control unit 260, again upon a full understanding of the situation and context of the aircraft, may automatically activate execution of a task on the aircraft (or other vehicle) when such capability is provided (such as turning on lights or activating an automatic pilot in an emergency).

While both the in-flight monitoring unit 256, task messaging unit 258, and the control unit 260 may operate automatically (or autonomously), an OB user interface 262 may be provided so that a remote off-board pilot or vehicle operator may receive and review the monitored data and then control the task messaging unit 258 and/or control unit 260 to control the message or control signals sent to the aircraft. By one form, the controls handled by the control unit 260 may be limited to non-critical controls, or some other limitations may be used.

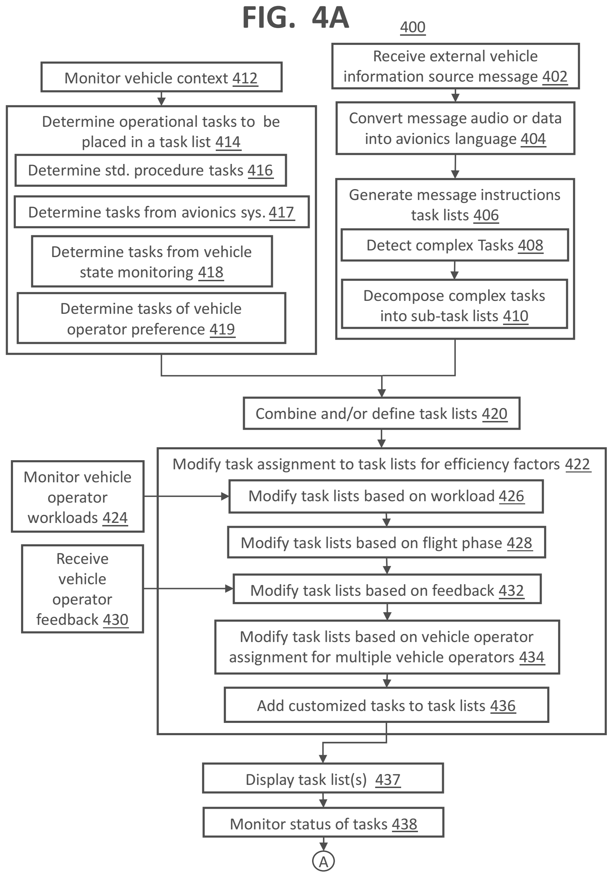

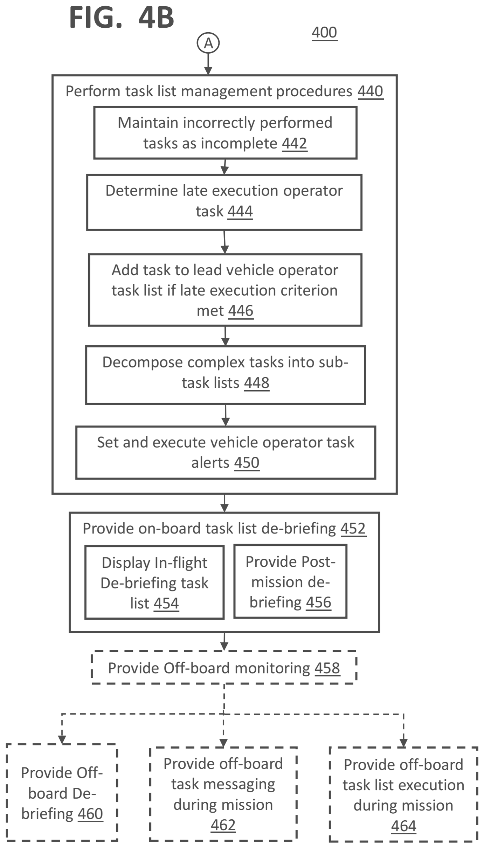

Referring now to FIGS. 4A-4B, a process 400 of task list generation and management for a vehicle is described according to at least one of the implementations herein. The process 400 includes operations 402 to 464, generally numbered evenly. Systems, device, modules, units, and display pages of any of FIGS. 1-3 and 5-8 may be referred to for explaining process 400, where relevant.

Process 400 may include "receive external vehicle information source message" 402. This refers to communications system 112 (or communications input unit 202) receiving audio messages over radio 114 or datalink/ACARS unit 205 receiving messages in digital form. The messages may include instructions (including any information or commands) from ATC, Automatic Terminal Information Service (ATIS), Aerodrome Flight Information Service (AFIS), Terminal Weather Information for Pilots (TWIP), AOC, and so forth providing clearance or other instructions. The audio also may be from pilot audio unit 203 including when the pilot repeats commands for the pilot on the aircraft.

Process 400 may include "convert message audio or data into avionics language" 404, where ASR and language models are used by the message conversion unit 204 to generate avionics language or vocabulary from the audio or datalink messages herein referred to as message instructions. This may include the use of Parts of Speech (POS) tags and other details mentioned above to identify the intent of the instructions. This may include identifying specific commands, such as to descend to an altitude or fly to a waypoint for example, begin approach, and so forth. The message instructions also may include specific parameters, such as 6000 feet, and so forth.

Process 400 may include "generate message instructions task lists" 406, and this may involve the task list generator unit 210, and specifically the message task unit 226 operating the list generation model 302 to generate a task list for the message instructions. The list generation model 302 may receive the current message instructions, and use the search and query unit 324 of the list generation model 302 to determine whether the dispatcher coordination database 320 (FIG. 3) already has a matching previously used message instructions task or task lists to be used for the current message instructions.

Once the tasks are matched, the identification and details unit 326 obtains the identification and details of the matched tasks to have those tasks used going forward and to determine any particular required treatment or limitations with those matched tasks. If no match exists, machine learning algorithms or rule-based algorithms may be used to generate the closest most likely task that should be used. Such algorithms may have pre-trained neural networks for such operations.

The checklists (or task lists) determined from the ATC or other received communications may primarily include instructions requiring procedural compliance or verification, such as clearance readback checklists, approach briefings incorporating ATIS data, and in-flight rerouting confirmations. These checklists are dynamic, as they depend on external input, but may intersect with standard SOPs for required phraseology and verification steps. Additionally, checklists ensuring compliance with oceanic clearances, CPDLC (Controller-Pilot Data Link Communications) messages, and weather advisories fall into this category. Some ATC-driven checklists may also require real-time monitoring to verify aircraft parameters before compliance (e.g., confirming altitude or speed adjustments), aircraft navigation settings (waypoints, routes, etc.), autopilot approach mode (ILS, VNAV, etc.), weather radar adjustment, airfield/taxiway lights, and so forth.

Operation 406 also may include "detect complex tasks" 408, and as performed by the complex task decomposition unit 228. While this operation may be used with operational tasks, it is assumed it will be mainly used with the message instructions tasks. Particularly, in cases of complex tasks such as executing clearances, the list generation model 302 may generate a single complex task that could be divided into simple sub-tasks that are easier to execute instead. This may involve determining whether the potentially complex task has a large number of steps and/or complex types of factors or steps. This may be performed by using rule based algorithms based on historical data as one example.

Operation 406 then may include "decompose complex tasks into sub-task lists" 410, where the complex task is divided into sub-tasks when it is determined the task is complex.

Simultaneously to generate the operational tasks, process 400 may include "monitor vehicle context" 412. This may be performed by the operational tasks monitoring unit 212 and the onboard avionics systems 208. The use of the sensors 126, avionics systems, and other aircraft systems may provide vehicle sensor data values, levels, summaries, or any other suitable sensor data format expected by the task list system 200 to report the status of the aircraft or vehicle. For an aircraft, this may include the general status of an avionics system such as cruising or may include any parameters set at any of the avionics systems, such as the vertical and horizontal position of the aircraft from the aircraft's navigation system and/or a flight plan from the FMS. This operation 412 also may include obtaining and reporting a general state of any of the aircraft systems or components, such as landing gear up, and/or specific status of components or devices such as for the engines or any of the flaps, control settings such as for brakes, thrusters, yoke, and/or pedals for example, any other aircraft parameter settings such as radio frequency, and so forth.

The monitored vehicle context also may include monitoring the weather currently at the vehicle and/or in the path of the vehicle ahead along a flight plan for example. Such weather may be obtained from an on-board aircraft weather or radar system, data received from external weather systems, and/or from weather reports through radio or other communications including when ATC or other external sources provide audio weather reports. The aircraft or vehicle may use the communications input unit 202 described above.

Process 400 may include "determine operational tasks to be placed in a task list" 414, and these may be determined by the operational tasks monitoring unit 212 and/or the task list generator unit 210 operating the list generation model 302. The operational tasks generally refer to any tasks that did not originate from message instructions, and may include tasks determined from monitoring of the vehicle (or aircraft), the avionics systems, standard operating procedure or (AFM) related tasks, or other sources.

Operation 414 may include "determine standard procedure tasks" 416, and this may involve obtaining tasks or commands to be used to form tasks from the operational tasks monitoring unit 212 and determining whether predetermined task lists match the obtained tasks or commands and can be used from the operational (or SOP) procedures database 308 or from the AFMs database 310 from the task list input database 304 (or 240). The task list generator unit 210 operates the list generation model 302 as explained above with the message instructions. The types of SOP or AFM checklists that may be used here may include "normal" checklists (such as preflight, before takeoff, cruise, descent, and shutdown), abnormal procedures (addressing non-critical deviations from normal operation), and emergency checklists (covering urgent failures like engine fire, rapid depressurization, or electrical failures). Other such checklists may be provided that are based on manufacturer guidance, regulatory standards, and operator-specific SOPs. The emergency and abnormal procedures may also be prompted by real-time monitoring systems or avionics alerts. Other SOP checklists (or task lists) may include landing gear deployment/retraction, fuel management tasks, cabin pressure settings, aircraft lighting (landing lights, taxi lights, etc.), anti-icing systems, oxygen system management, autobrake settings, aircraft navigation settings (waypoints, routes, etc.), fuel flow/engine power settings, flight path angle (climb/descent rates), speed brakes (spoilers), trim control adjustments, landing flap settings, autothrust/autothrottle, air conditioning/pressurization control, windshield wiper operation, and seatbelt sign control

Operation 414 may include "determine tasks from avionics systems" 417. For the operation here, the onboard avionics systems 208, either directly or via the operational tasks monitoring unit 212, provide the avionics-driven checklists (or task lists) which are then directly aggregated or compiled with the other generated or collected tasks. Such avionics systems tasks are often displayed automatically through electronic checklist (ECL) interfaces or flight deck alerting systems that automatically populate in response to specific aircraft status changes, such as an engine failure warning triggering the respective ECL procedure. In this case, however, an additional task list is displayed as described herein in a task list window, overlay or page. The avionics-generated checklists may include system-driven maintenance checklists, configuration reminders (e.g., landing gear status checks on approach), verification procedures following system faults. Some avionics systems checklists also link back to SOP-based procedures, better ensuring standardized crew responses to system-generated alerts. Other avionics systems task lists may include weight and balance warnings, flight path angle (climb/descent rates), oxygen mask deployment, auto-land, speed brakes (spoilers), landing flap settings, autothrust/autothrottle, autopilot approach mode (ILS, VNA V, etc.), weather radar adjustment, and flight data monitoring and alerting. Many other examples exist.

Operation 414 may include "determine tasks from vehicle state monitoring" 418, where here, the real-time, vehicle context monitoring data also may be handled by the operational tasks monitoring unit 212. Checklists based on real-time monitoring of aircraft systems and components may be derived from continuous data analysis of engine parameters, hydraulic pressures, flight control positions, and other critical sensors. These include automatic checklist prompts for system faults, trend monitoring-based alerts (such as excessive vibration or deteriorating oil pressure), and performance-driven checklists that recommend actions based on detected conditions. Many abnormal and emergency checklists from SOPs or avionics systems are triggered by such real-time monitoring. Additionally, performance-based checklist adjustments, such as recalculating landing distances due to an overweight landing or high brake temperatures, and otherwise weight and balance warnings, flight path angle (climb/descent rates), oxygen mask deployment, aircraft configuration changes (seat configuration, galley setup), cargo compartment temperature or ventilation, cargo door/access panel automation, and flight data monitoring and alerting may be considered vehicle state monitoring tasks or tasks from other overlapping checklist categories.

Other operational checklists (or task lists) encompasses operational or situational checklists that are neither purely procedural nor fully system-driven. This includes company-specific operational checklists, contingency checklists for delays or diversions, and pilot-initiated decision-making checklists such as fuel planning, alternate airport assessments, or cabin-related incidents. These checklists often incorporate elements from the four primary categories (SOP, avionics systems, vehicle monitoring, and message instructions) but remain distinct in that they are situation-dependent rather than explicitly triggered by standard operating procedures, ATC instructions, system monitoring, or avionics-generated alerts. Other task lists may be related to aircraft configuration changes (seat configuration, galley setup), airfield/taxiway lights, and cargo compartment temperature or ventilation.

Operation 414 may include "determine tasks of vehicle operator preferences", where these may be predetermined and stored on a database 312, and the task list generator unit 210, and in turn the list generation model 302, may use the preferences to modify the task lists being generated. Otherwise such preferences may be obtained by a task list settings page or through the feedback operations mentioned below.

Process 400 may include "combine and/or define tasks lists" 420. This includes a number of different options for setting up the task lists that can be implemented by the task list generator unit 210 and/or the list generation model 302, and more precisely the task aggregator unit 328 and the task list compiler 232. This may include keeping the operational tasks on separate task lists from the message instructions tasks when it is found that such an arrangement is more efficient or should provide better performance for the vehicle operators. Thus, it may be found that it is more convenient, easier, or a better distribution of tasks to keep these lists separate. By another form, it may be found that combining the operational and message instructions tasks into the same lists (and ignoring this difference) provides higher efficiency, etc.

As one example option, the tasks lists may be kept separate by the following categories. Thus by one example, there may be a separate task list for each of: ATC Radio handling, onboard SOP handling, dispatcher handling, ground handling, tug-taxi coordination, and ATC change-over handlings.

Once the initial task lists are set and stored (or made accessible), process 400 may include "modify task assignment to task lists for efficiency factors" 422, and this may be performed by the task scheduler unit 206.

To enhance or modify the task lists, process 400 may include "monitor vehicle operator workload" 424, and as performed by the workload unit 244. The workload is specifically the workload of the vehicle operators that are to perform and/or monitor the tasks of the task lists in the vehicle or those that will view the task lists on the vehicle and report the tasks to other vehicle operators that will perform and/or monitor the tasks on the vehicle. For this operation, both expected workloads and real-time actual workloads may be determined. For real-time workload monitoring, continuous monitoring of the crew's cognitive workload improves the effectiveness of the task lists. By utilizing the sensors and data inputs mentioned above, such as cameras in a cockpit, for the workload monitoring, the system monitors the crew's mental engagement and stress, better ensuring that tasks are adjusted to prevent cognitive overload or underload. Thus, rule-based algorithms, machine learning, and/or neural networks may receive input sensor data and that are pre-trained on historical workload monitoring data to provide conclusions as to the state of the vehicle operators. This may be performed by the workload unit 244 that may provide reports indicating the general status of the crew as a whole, such as with a range of 0 to 5 as to the stress levels and busyness of the crew, and/or may provide such a report on one or each individual vehicle operator. These reports also may be individualized to specific tasks being performed.

The work (or duty) time of the vehicle operators also may be monitored. While having a knowledge of the expertise of a vehicle operator, monitoring the work (or duty) time provides indications of vehicle operator engagement or attentiveness versus fatigue. Thus, the hours unit 246 receives vehicle operator monitoring data indicating user idle durations, user duty period durations, and flying hours. This permits task shifts among task lists of multiple vehicle crew operators to distribute the workload more equally to better ensure the attentiveness of all of the pilots.

Other characteristics of the expected (or predicted) workload to consider are based on historical knowledge of the properties of the tasks and predetermined conclusions about an amount of work for each task rather than real-time monitoring. This involves reviewing the task lists themselves for a number of tasks to be performed, a complexity of the tasks, an urgency of the tasks, a target execution time of the task, a location of action on the vehicle to perform the task, and required task assignment to a user with a certain status.

One such characteristic of the workload is the ease of executing the tasks physically on the vehicle or in a cockpit. Thus, it will be known that some controls are closer to the pilot and some controls are closer to the co-pilot for example. The workload unit 244 may have access to tables which contain an index of ease of access to each vehicle operator and stored on a database.

Operation 422 may include "modify task lists based on workload" 426. Based on current workload, ease of access, and fatigue probability, the workload unit 244 assigns the task to a particular vehicle operator. When the vehicle is being operated by multiple users, the generating of at least one task list may include generating at least two tasks lists each having at least one different task. Here, each task list is generated by considering a workload to be performed by a different user. Thus, each or individual vehicle operators on a vehicle may have their own customized or individualized task list.

Process 400 may include "modify task lists based on flight phase" 428, and as performed by the phase unit 242. This task shift involves determining a better workload balance among the phases of a mission for the vehicle or aircraft. The phases may include general phases such as taxiing or airside travel, take-off, cruising, and landing to name a few examples. More specific phases may be provided such as holding pattern, approach, and so forth. During high workloads, a flight crew is especially vulnerable to multi-tasking breakdown, unintentional (or undesirable) skipping of tasks, and reduction in situational awareness. These high workload phases also result in more head down time (looking at the instrument panel rather than viewing ahead of the aircraft) and higher cognitive workload. Vehicle operators that do not take a sufficient amount of rest during high workload peaks or phases also increase the risk of fatigue. On the other hand, during level flight or cruising, the workload can be significantly reduced and may lead to boredom and therefore fatigue as well.

Thus, correct workload distribution by the phase unit 242 reduces the workload during busy phases and increases the workload during slow phases by shifting tasks that do not have critical execution times during the high workload phases. This better ensures increased situational awareness and performance of tasks on the task lists. This also better ensures increased situational awareness and attentiveness of the vehicle operators. Such a workload shift from phase to phase can be particularly beneficial for a single pilot aircraft that has a task list generated for each or multiple individual phases of a mission.

Process 400 may include "receive vehicle operator feedback" 430, and as performed by a feedback unit 250. For this operation, the display task list(s) operation 437 may have already occurred, and a feedback area such as a page, window, or overlay may provide the vehicle operator a GUI mechanism to select a task on a displayed task list or a task menu. Specifically, the feedback area may pop up or may be provided on a separate page when a task is selected and that provides a way to receive comments related to the task and from the vehicle operator. The comments merely may be predetermined comments with a GUI device, such as buttons, to select a comment relevant to the selected task from a comment menu. Otherwise, a comment field may be provided for the vehicle operator to input a comment related to the selected task. This may include receiving typed, touchscreen, or keypad input. The input comments also may be audio input for example.

Once the vehicle operator inputs a comment, operation 422 may include "modify task lists based on feedback" 432, where the feedback unit 250 receives the comment that indicates one or more reasons at least one of the tasks on at least one task list cannot be performed or should be performed differently. In response to receiving the feedback, the task list generator unit 210 may change at least one task list by either eliminating the task, or decomposing the task to sub-tasks by the complex task decomposition unit 228, or other action related to the task. Whether the task is eliminated as being impossible to perform or is decomposed to sub-tasks, these procedures are saved and stored with the task list data to be analyzed during de-briefing either on the vehicle or off-board, or both.

Operation 422 may include "modify task lists based on vehicle operator assignment for multiple vehicle operators" 434, and this may be performed by the workload unit 244 as well. Here, the crew roster database 318 is consulted to learn the number and abilities of the crew members of the vehicle (or aircraft). The tasks of the task lists can then be modified and allocated according to the crew properties or characteristics, whether or not workload is factored as mentioned above.

By one example form, the assignment of task to different crew members is accomplished by first contextually (by using the characteristics of the crew) assigning the tasks for the pilot in command (PIC) first, and then assigning tasks to other vehicle operators, or in one example first officer in command (FIC). This may be performed by determining the tasks of each of the legs (or phases) of a flight plan, and assigning the tasks to the crew leg by leg (or phase by phase) by phase unit 242. These assignments may be based on providing tasks to idle times as mentioned above for workload or task shifting, and may include emergency operations in addition to both high and low workload phases or legs.

By some forms, certain tasks can only be performed by vehicle operators with certain characteristics, such as a level of expertise. Thus, by some forms, only the captain or PIC can perform certain difficult tasks such as complex approaches and landings at certain airports. These task lists will often show up with SOP task lists and by using the crew roster database 318.

Also, these workload shifts for multiple vehicle operators result in different customized task lists for the different crew members, and these are shown on FIGS. 5-6 that are described below.

Operation 422 may include "add customized tasks to task lists" 436, and by the customized task unit 230. Customized task lists or individual tasks may be added by a vehicle operator on a task list entry page, window, or overlay (not shown). This page may provide a menu of selected predetermined tasks, by GUI devices, to be selected by the vehicle operator and then that is added to the task lists. This task list entry page may be separate from the feedback area or may be both on the same page. Otherwise, the task list entry page may provide a field for the vehicle operator to enter or input a description of the task or task list, which is then analyzed and added to the appropriate task list. By yet another option, the avionics systems or other vehicle system may analyze the task list data mentioned herein as well as the state of the vehicle and vehicle context, and generate its own customized task or task list. This may involve neural networks, machine learning, or other artificial intelligence (AI) algorithms. The customized task unit 230 may manage the display of the task list page, obtaining the task list input, analyzing the input, and adding the task or task list to the previously generated task lists. The task lists are revised as needed and provided to the task scheduler unit 206.

Process 400 may include "display task list(s)" 437, and once the task lists are established by the task scheduler unit 206, the task list display manager 216 generates the image data to display the task lists, as overlays or windows in the examples below, but may be dedicated task list pages instead. The task list display manager 216 then provides the image data of the task lists to the display device 106 and to display the task lists on the display 218.

As one example implementation, the vehicle operator may view the lists by engaging a checklist activator (not shown) if the displaying of the task lists is not already provided in an "always on" mode. As mentioned, a task list area, such as a window or overlay, may be provided on an avionics page. Such a page may be a Navigation Display (ND) as shown in FIGS. 5-8 below, but otherwise may be placed on or over an FMS page, a radio page, a PFD, a Multi-Function Display (MFD), an Engine Indication and Crew Alerting System (EICAS) page, a Traffic Collision Avoidance System (TCAS) page, a Standby Instrument Display, a Radio Management Panel (RMP), an Autopilot Control Panel (ACP), a Weather Radar Display, a Flight Data Recorder (FDR) Display, Cockpit Voice Recorder (CVR) Interface, and/or many other avionics pages.

For the example implementation here of FIGS. 5-8, the following vehicle context or situation is assumed where the current aircraft altitude is 12,000 feet and a CPDLC provides datalink message instructions of a clearance of: "DESCEND to 6000 feet". The CPDLC may be an oceanic CPDLC satellite-based (SATCOM) Future Air Navigation System version 1/A+ (FANS 1/A+), or continental CPDLC Aeronautical Telecommunication Network Baseline 1 (ATN B1) used in transoceanic routes for these examples and where traditional ATC and radio is unavailable.

The entire example single task list for the received message instructions for the aircraft includes the following tasks in order:
(1) When crossing below 10000 feet, switch ON the landing lights.
(2) If the Transition Layer is 8000 feet for the destination airport, change the pressure from QNE to QNH upon crossing below 8000 feet.
(3) Deploy approach flap when reaching 6000 feet. Distance from the runway will be less than 10NM.

The task list system 200 determines the pilot is to perform tasks (1) and (3), while the co-pilot is to perform task (2).

Referring to FIG. 5 for this example, a display 500 on a display device shows a PIC's task list (also referred to as the captain's or pilot's window). The display 500 has a navigation display (ND) image 502 with horizontal or lateral situation window 504, a vertical profile or trajectory window 516, an engine window 506, and a fuel quantity window 508 while a task list overlay or window 510 has a label "Task" or other desired label that is easily understood. The task list window 510 also has a task list 514 that lists task (1) and (3). Alternatively, the task list 514 may list many different tasks as mentioned above and may be customized for this particular pilot.

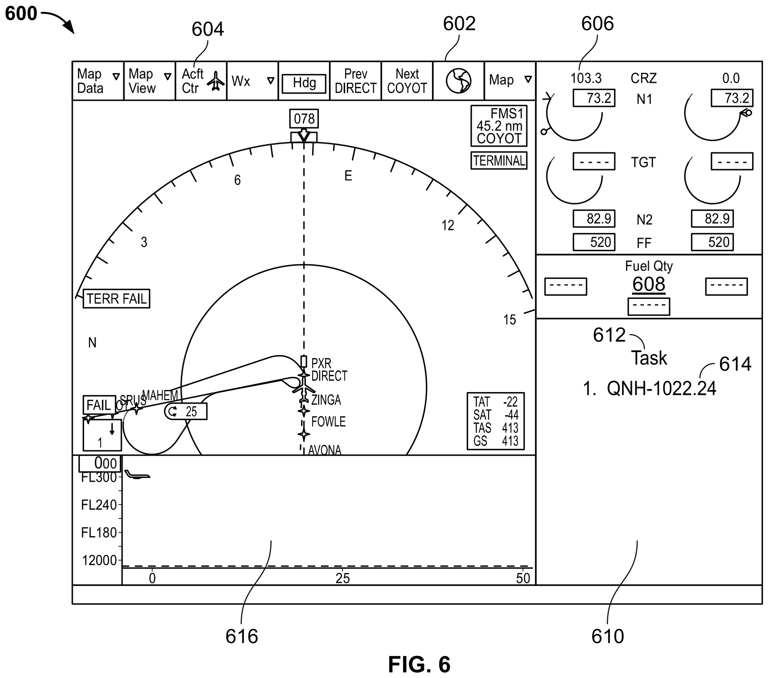

Referring to FIG. 6, a display 600 on a display device shows the same or similar ND as with display 500 such that the features that are the same have similar identification numbers and need not be described again here. In this example, however, a task list window 610 has a task list 614 with the single task (2) mentioned above to have the co-pilot change the pressure.

The tasks may be described in the task lists in many different ways. The tasks may provide details description or may be more cryptic as shown, where the triggering altitudes are not on the task lists. Instead, the triggering altitudes are simply remembered by the pilot, particularly when such an altitude is used repeatedly or is an SOP. Otherwise, the task may be or have a GUI on the window 510, and activating the task may open more details for the selected task. Alternatively, an advanced avionics suite may provide support and an alert (whether visual or audio) when the trigger altitude is reached for each task on the task list 514.

Upon execution of a task, the task may be marked with a tick mark or different color coding as one example. The task list display manager 216 may manage the visual appearance and changes to the appearance of the tasks on the task list. Thus, for one example implementation, different highlighting and color on the task lists of the vehicle operators may include different colors, text formats, background shading, and so forth to show (a) active tasks, (b) tasks to be performed yet (or incomplete tasks), (c) stale tasks that are old and have not been performed, (d) unattended (or skipped or missed) tasks, (e) completed tasks, (f) repeated or recurrent tasks, (g) tasks of a certain vehicle operator, and so forth.

Process 400 may include "monitor status of tasks" 438, and this may be performed by the task status monitor unit 332 and/or the task list monitor 234 to determine the status of any of tasks (a) to (g) mentioned above. Such status may be determined by obtaining the vehicle monitoring data to determine when a task has been completed, and recording when a task have been completed in a memory or database. Tasks that are eliminated or divided into sub-tasks may be recorded with indicators of those actions in a database as well. The task lists themselves may be stored in the checklists database 306. This operation also may include refreshing the task lists repeatedly after certain intervals, and updating the task list displays on the vehicle and/or to the vehicle operators accordingly.

Process 400 may include "perform task list management procedures" 440, and these procedures may be used once the task lists are displayed and are being executed. Thus, operation 440 may include "maintain incorrectly performed tasks as incomplete" 442. This involves having the parameter matching unit 209 determine if a match exists between a requested parameter from the message instructions or other source and a corresponding input parameter by the vehicle operator or other input source. The parameters are typically entered on the avionics pages. When a mis-match of parameter values is detected, the task list display manager 216 is instructed to show a task as incomplete. This may result in showing an alert on the task list to show flashes, highlight, color (such as red), etc. at the task on the task list that was entered incorrectly, or at another location on the displays.

Operation 440 may include "determine late execution operator task" 444. Here, the task list monitor 234 and/or 332 may determine a task has been unattended for a period of time over a duration threshold for that type of task. The task list input database 304 or other database may have a table (not shown) for such timing and may be generated by experimentation and using historical data. When such a delay is detected, the task list display manager 216 is instructed to show a task as incomplete by showing the task text or the background at the task a different color, format, and so forth. Other alerts on the displays or in audio may be provided as well. By one example, the change in the appearance of a task with late execution may change when the duration increases to certain amounts (such as yellow for a shorter late duration and red if a longer duration).

Operation 440 may include "add task to lead vehicle operator task list if late execution criterion met" 446, and this occurs when a task is originally on a task list of a non-PIC or non-captain task list, such as on an FIC or another crew member task list. If the crew has not executed the task after a pre-determined duration (whether a separate duration threshold or one of the duration thresholds used for the appearance of the late execution task mentioned above), then the task status monitor unit 332 and/or task list monitor 234 instructs the task list compiler 232 and task aggregator unit 328 to add the late incomplete task onto the PIC task list. The late incomplete task may or may not be removed from the crew member task list. The task list display manager 216 then refreshes the displays of the task lists accordingly. The duration of the delay to execute the task may be one criterion, while other criterion may be used so that moving an incomplete task from one of the task lists of the co-vehicle operators to the task list of the lead vehicle operator (or PIC) may occur when at least one criterion is met that is associated with the incomplete task. Another criterion may be the priority level of the task, where tasks with very low priorities are not moved.

Operation 440 may include "decompose complex tasks into sub-task lists" 448, and this may be applied when the decomposition was not performed automatically already by the complex task decomposition unit 228. In this case, the feedback from the vehicle operator may include an explanation that a task is too complex, which then performs the decomposition in response to the feedback about the task complexity, while the task list compiler 232 refreshes the task lists and provides the task list of sub-tasks to the task list display manager 216 for display.

Operation 440 may include "set and execute vehicle operator task alerts" 450. Task list alert unit 248 may perform a number of different alerts. By one form the task list alert unit 248 may execute alerts for late execution of tasks as mentioned above. As another example alert procedure, when one of the pilots is resting and is off-duty, and whether the pilot remains within a cockpit or is elsewhere on the vehicle, the task status monitor unit 332 and/or task list monitor 234 may determine the number of incomplete tasks and/or duration to execute the tasks has reached a threshold, or a complexity of one or more tasks or urgency of one or more tasks has reached one or more predetermined criterion. In response, the task list alert unit 248 may be instructed to issue an alert to the off-duty pilot to return to duty and resume executing tasks on a task list. The alert may be a visual alert on a display or other device on the instrument panel in the cockpit. Otherwise, the alert may be audio (or both audio and visual). By one example, the audio provided through headphones worn by the off-duty pilot, and when the off-duty pilot is sleeping, the alert may be considered a wake-up alert or alarm. The headphones may be wireless, wired, or any other suitable technology.

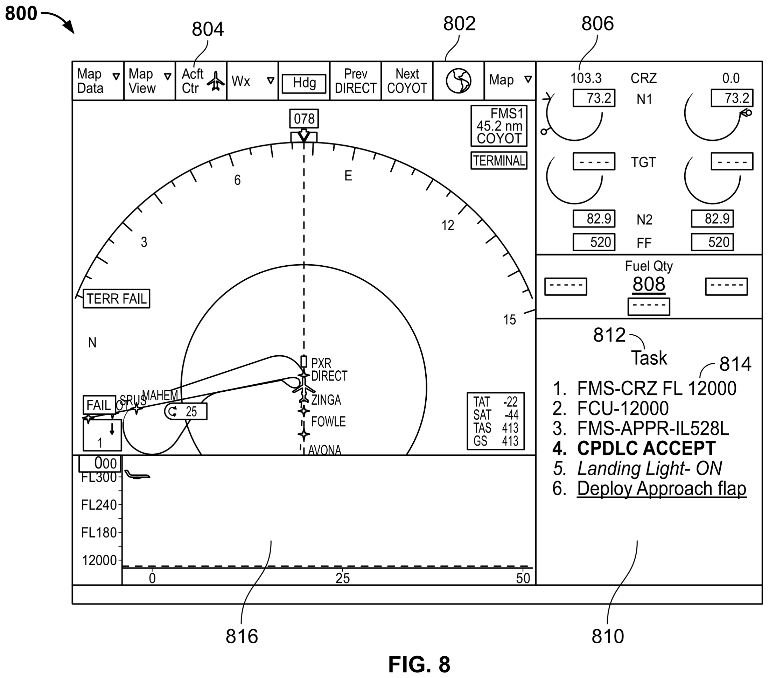

Referring to FIG. 8, process 400 may include "provide on-board task list de-briefing" 452, and operation 452 may include "display in-flight de-briefing task list" 454. Thus, for example, a display 800 has the same ND display as display 500 such that similar features on both displays are numbered similarly and need not be described again. In this de-briefing example, however, the task list window (or overlay) 810 has a de-briefing task list 814. This may be shown upon selecting a de-briefing task list button on a task list menu page (not shown) as one example. The monitoring units 234 and 332 gather the desired data and status of all tasks to be listed, and directly or via the task list generator unit 210, provides the de-briefing list to the task list display manager 216 to display the de-briefing task list. As one example, a vehicle operator may select display of the de-briefing task list after an off-duty break to learn the current state of the task lists. Thus, the de-briefing task list 814 may show all tasks for all current task lists for all vehicle operators or crew, and for all operations or task list categories, or any desired combination of these. The status of the individual tasks on the de-briefing task list (or other task list) may be shown in different colors, formats, different graphics such as indicators, icons, etc., and so forth. In the present example of de-briefing task list 814, plain text tasks indicate completed tasks shown in green, a bold task indicates an active or current task being performed and shown in purple, an italic task indicates an incomplete task on the pilot's own task list shown in white, and an underlined task shows a task from a task list of another crew member and shown in yellow. Many variations to the display of the de-briefing task list may be used.

Operation 452 may include "provide post-mission de-briefing" 456, where this de-briefing occurs on the vehicle or aircraft. Here, all of the task lists used may be viewed and are recorded in the checklists database 306 or another database for example. The user may open the post-mission de-briefing by using a user interface, such as input device 103, described elsewhere herein and by activating a post-mission de-briefing GUI on a task list menu page (not shown) if provided. The recorded data that can be viewed also may include details about the execution of a task including the message instructions or other data that instigated the generation of the task, the timing of the task execution, any abnormalities related to executing the task such as any difficulties or reasons the task could not be completed. The display of any such post-mission data may be provided from the various systems including the monitoring units 234 and 332, and displayed by the task list display manager 216 or other display units for displaying on display 218. This de-briefing data also may be downloaded for later analysis.

Optionally, process 400 may include "provide off-board monitoring" 458, where the remote system 150 may have the off-board (OB) system 156 to at least monitor the task list management, and additionally to assist with task list management to reduce the workload for onboard vehicle operators, and including for single pilot aircraft. The off-board monitoring may be post-mission and/or during a mission or flight. The off-board monitoring may collect at least the task list data mentioned above for post-mission de-briefing, but also may receive data and communications sufficient to capture the vehicle context or state and make decisions as described below. Thus, the off-board systems may collect the monitoring data of the sensors, vehicle state conclusions, avionics systems status, state, and parameters being handled, as well as any other data desired to make remote task list management and/or task list execution decisions as described below.

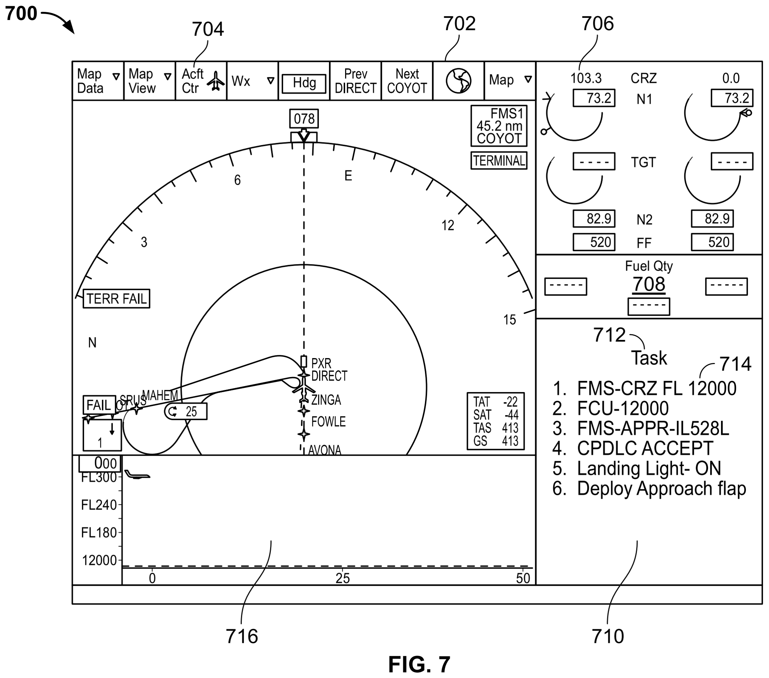

Referring to FIG. 7, process 400 may include "provide off-board de-briefing" 460, and performed by the de-brief monitoring unit 252. Here, the de-brief monitoring unit 252 collects the post-mission monitoring data and may arrange the data in tables, and so forth, for analysis to detect where the task list management and display could be improved or used for other purposes such as for vehicle efficiency analysis. Such data may be obtained from the monitoring units 234 and 332, checklists database 306, or other local or remote database. Display 700 shows the same ND as on display 500 such that features are numbered similarly on the two displays and need not be described again. Here, display 700 has a task list window or overlay 710 with a de-briefing task list 714 of completed tasks, and collected from all of the members of the crew. By one form, the monitored data only relates to non-navigation categories of vehicle operation when the OB system is only to monitor (and/or analyze) the task list management, determine tasks which were executed and which other data may be used for future execution, and/or preview cockpit events which helps to understand emergency or other specific situations better. This may include data mining to determine recognizable trigger conditions that resulted in active message instructions (or datalink/voice commands) combined with standard and checklist procedures that generated specific tasks for one or more crew members. Whether onboard or offboard monitoring, the de-briefing may provide or assist to provide maintenance reports or task compliance monitor reports.

Process 400 may include "provide off-board task messaging during mission" 462, and here, the in-flight monitoring unit 256 may collect data of identification and real-time status of the tasks on the at least one task lists as well as any of the other collected data that provides the real-time context of the vehicle, the current status of the tasks on the task lists, and situational awareness that is as close to the vehicle context or situational awareness learned by the vehicle operators onboard the vehicle. The in-flight monitoring unit 256 analyzes this data and determines which tasks are late in execution and/or which tasks could be automatically performed by the OB system to reduce the workload of the vehicle operator. The in-flight monitoring unit 256 may have algorithms such as rule based algorithms, pre-trained machine learning algorithms and neural networks, and so forth that can analyze the situation on the vehicle and provide such automatic action recommendations, whether messaging about incomplete tasks or activating controls.

By one example form, the OB user interface 262 is provided so that an off-board pilot or vehicle operator may review the collected data to make manual messaging and/or control decisions, whether or not the in-flight monitoring unit 256 has provided recommendations. In this case, the off-board vehicle operator may have access to the OB user interface 262 which may provide a display with GUIs to receive identification of a task and approval of the recommendations of a task message or control signal, or to manually activate transmission of a task message or control signal.

Once it is decided, whether automatically or manually, that a message should be transmitted back to the vehicle to inform the onboard vehicle operator that a task was missed and should be performed, the task messaging unit 258 may transmit a message back to the vehicle to display to the vehicle operator or otherwise activate an alert. The message may include data to be received on the vehicle that automatically provides a task message to be displayed on the vehicle and that provides directions related to at least one of the tasks on at least one of the task lists. By one example form, the task message may be a reminder to perform an identified task from at least one task list that has not been performed yet. Otherwise, the task message may relate to one of the message instructions and is related to a clearance instruction from an air traffic control as one example. The message may be provided to the alert unit 250 or other unit for depiction on the display 218.

Additionally or alternatively, process 400 may include "provide off-board task list execution during mission" 464. This involves having the control unit 260 receive instructions from the in-flight monitoring unit 256 to send a control signal to automatically (or autonomously) activate execution of a task on the vehicle, such as turning on lights as one possible example of many. The off-board pilot may or may not be involved as mentioned above. Thus, in response to the transmission of the monitored data to the OB system 156, data then received on the vehicle may automatically activate performance of at least one of the tasks on at least one of the task lists and automatically performed on the vehicle. Optionally, this remote automatic control also may be limited to certain tasks, such as non-priority tasks, non-navigation tasks, and so forth as desired.

It should be appreciated that the process 400 may include any number of additional or alternative operations, and the operations need not be performed in the illustrated order. Also, the operations of process 400 may be performed concurrently, and/or may be incorporated into a more comprehensive procedure or process having additional functionality not described in detail herein. Moreover, one or more of the tasks shown and described in the context of FIGS. 4A-4B can be omitted from a practical implementation of the process 400 as long as the intended overall functionality remains intact.

It should be noted that the terms avionic and avionics are used interchangeably herein to refer to anything related to a flying vehicle.

The subject matter may be described herein in terms of functional and/or logical block, module, or unit components, and with reference to symbolic representations of operations, processing tasks, and functions that may be performed by various computing components or devices. It should be appreciated that the various block components shown in the figures may be realized by any number of hardware components configured to perform the specified functions. For example, an implementation of a system or a component may employ various integrated circuit components, e.g., memory elements, digital signal processing elements, logic elements, look-up tables, or the like, which may perform a variety of functions under the control of one or more microprocessors or other control devices. Furthermore, implementations of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "connected" or "coupled" together. As used herein, unless expressly stated otherwise, "coupled" and "connected" refers to one element/node/feature is directly or indirectly joined to (or directly or indirectly communicates with) another element/node/feature, and not necessarily mechanically. Thus, although the drawings may depict one example arrangement of elements directly connected to one another, additional intervening elements, devices, features, or components may be present in an implementation of the depicted subject matter. In addition, certain terminology may also be used herein for the purpose of reference only, and thus are not intended to be limiting.

The foregoing detailed description is merely example in nature and is not intended to limit the subject matter of the application and uses thereof. Furthermore, there is no intention to be bound by any theory presented in the preceding background, brief summary, or the detailed description.

While at least one example implementation has been presented in the foregoing detailed description, it should be appreciated that a vast number of variations exist. It should also be appreciated that the example implementation or example implementations are only examples, and are not intended to limit the scope, applicability, or configuration of the subject matter in any way. Rather, the foregoing detailed description will provide those skilled in the art with a convenient road map for implementing an example implementation of the subject matter. It should be understood that various changes may be made in the function and arrangement of elements described in an example implementation without departing from the scope of the subject matter as set forth in the appended claims. Accordingly, details of the example implementations or other limitations described above should not be read into the claims absent a clear intention to the contrary.

## Claims

1. A method, comprising:
receiving message instructions to operate a vehicle and originating externally from the vehicle;
generating, by at least one processor, message instruction tasks to be performed to operate the vehicle and by using the message instructions;
generating, by at least one processor, operational tasks to be performed to operate the vehicle originating from other than the message instructions;
determining, by at least one processor, a workload of at least one vehicle operator of the vehicle comprising factoring characteristics of the message instruction tasks or operational tasks or both to be performed;
generating, by at least one processor, at least one task list to be performed by the at least one vehicle operator, wherein inclusion of a task on the at least one task list depends on the workload of the at least one vehicle operator, and wherein each task list provides (1) one or more message instruction tasks, (2) one or more operational tasks, or both (1) and (2) in a single task list;
displaying the at least one task list at a display device on the vehicle;
transmitting data of at least one of the task lists from the vehicle and to a location remote from the vehicle; and
in response to the transmission, receiving data on the vehicle that automatically provides a task message to be displayed on the vehicle that provides directions related to at least one of the tasks on at least one of the task lists.

2. The method of claim 1, wherein the task message is a reminder to perform an identified task from the at least one task list that has not been performed yet.

3. The method of claim 1, wherein the task message relates to one of the message instructions and is related to a clearance instruction from an air traffic control.

4. The method of any one of claims 1-3, comprising: in response to the transmission, receiving data on the vehicle that automatically activates performance of the at least one of the tasks on at least one of the task lists and automatically performed on the vehicle.

5. The method of claim 4, wherein the vehicle is a single pilot aircraft.

6. The method of claim 1, wherein the transmitting data comprises transmitting data of identification and real-time status of the tasks on the at least one task list.

7. The method of claim 1, wherein the characteristics comprises: a number of tasks to be performed, a complexity of the tasks, an urgency of the tasks, a target execution time of the task, a location of action on the vehicle to perform the task, a user idle duration, a user duty period duration, and required task assignment to a user with a status.

8. The method of claim 1, wherein the vehicle is being operated by multiple users, wherein the generating of at least one task list comprises generating at least two tasks lists each having at least one different task, wherein each task list is generated by considering a workload to be performed by a different user.

9. A system, comprising:
memory; and
processor circuitry forming at least one processor communicatively coupled to the memory and being arranged to operate by:
receiving message instructions to operate a vehicle and originating externally from the vehicle,
generating message instruction tasks to be performed to operate the vehicle and by using the message instructions,
generating operational tasks to be performed to operate the vehicle originating from other than the message instructions,
determining a workload of at least one vehicle operator of the vehicle comprising factoring characteristics of the message instruction tasks or operational task or both to be performed,
generating at least one task list to be performed by the at least one vehicle operator, wherein inclusion of a task on the at least one task list depends on the workload of the at least one vehicle operator, and wherein each task list provides one or more message instruction tasks, (2) one or more operational tasks, or both (1) and (2) in a single task list,
displaying the at least one task list on a display device on the vehicle, and
in response to displaying the at least one task list, receiving feedback by use of a user input device on the vehicle and that indicates one or more reasons at least one task on the at least one task list cannot be performed.

10. The system of claim 9, wherein the at least one processor is arranged to operate by: in response to receiving the feedback, changing the at least one task list.

11. The system of claim 9 or 10, wherein the generating of message instruction tasks and operational tasks comprises dividing complex tasks into sub-tasks to be listed on the at least one task list.

12. The system of any one of claims 9-11, wherein the generating of operational tasks comprises generating at least one of: a task received from a user input device on the vehicle entered by the vehicle operator and input into a vehicle system used to operate the vehicle, a task automatically generated by a vehicle system used to operate the vehicle, a standard operating procedure task, a task originating from a vehicle manual used to operate the vehicle.

13. The system of claim 9, wherein the generating of operational tasks comprises obtaining tasks from a predetermined checklist.

14. The system of any one of claims 9-13, comprising displaying a de-briefing task list page on a display device that lists tasks that were listed on the at least one task list during a mission and a status of individual tasks on the at least one task list.
